# EUROPEAN PATENT APPLICATION

(11) **EP 2 058 280 A1**
(43) Date of publication of application: **13.05.2009**
(21) Application number: 07790390.4
(22) Date of filing: 24.08.2007
(51) Int. Cl.: C01F 7/00, C01G 9/00, C08K 9/02, C08L 27/06

(54) **SILICIC ACID COATED HYDROTALCITE PARTICLE POWDER, STABILIZERS FOR CHLORINE-CONTAINING RESINS MADE BY USING THE POWDER, AND CHLORINE-CONTAINING RESIN COMPOSITIONS**

(30) Priority: 29.08.2006 JP 2006232641
(71) Applicant: Toda Kogyo Corporation, 1-4, Meijishinkai Otake-shi Hiroshima 739-0652 (JP)
(72) Inventor: YAMAMOTO, Manabu, Otake-shi Hiroshima 739-0652 (JP); KOBAYASHI, Naoya, Otake-shi Hiroshima 739-0652 (JP); HONMYO, Torayuki, Otake-shi Hiroshima 739-0652 (JP)
(74) Representative: Woods, Geoffrey Corlett
(86) International application number: PCT/JP2007/000905
(87) International publication number: WO 2008/026308

(57) **Abstract**

In accordance with the present invention, the surface of hydrotalcite-based compound particles can be prevented from being attacked by chlorine ions desorbed from resins. The silicic acid-coated hydrotalcite-based compound particles obtained by coating the surface of Mg-Al-based or Mg-Zn-Al-based hydrotalcite-based compound particles with silicic acid in an amount of 0.25 to 25% by weight in terms of SiO₂ based on the weight of the hydrotalcite-based compound particles, and drying the thus coated hydrotalcite-based compound particles at a temperature of 105 to 150°C as well as the hydrotalcite-based compound particles obtained by heat-treating the silicic acid-coated hydrotalcite-based compound particles at a temperature of 150 to 350°C are used as a stabilizer for chlorine-containing resin compositions.

## Description

### TECHNICAL FIELD

The present invention relates to silicic acid-coated hydrotalcite-based compound particles, and more particularly, to silicic acid-coated hydrotalcite-based compound particles which are free from foaming of chlorine-containing resin compositions having a high processing temperature due to the hydrotalcite-based compound when used in the compositions, and are capable of imparting excellent stability and tinting property to chlorine-containing resins. In addition, the present invention also relates to a stabilizer for chlorine-containing resins and a chlorine-containing resin composition which use the silicic acid-coated hydrotalcite-based compound particles.

### BACKGROUND ART

In recent years, Pb-based compounds and Sn-based compounds conventionally used as a stabilizer for chlorine-containing resins have now been replaced with harmless combination of a metal soap and a hydrotalcite-based compound. Not only soft resin compositions but also hard resin compositions which comprise the chlorine-containing resins have a remarkable tendency toward such a change of the stabilizer therefor.

The hard materials using the chlorine-containing resins have been used in various applications such as building materials and pipes, but require a high processing temperature unlike the soft materials.

The hydrotalcite-based compounds have water molecules and hydroxyl groups as well as anions such as carbonate ions in a large amount in their structures, and gasified upon heating and finally converted into oxides, resulting in weight loss reaching little less than 57% by weight of an original weight thereof. Desorption of the water molecules from the hydrotalcite-based compounds is initiated at a temperature of about 100°C, and successively desorption of the hydroxyl groups or anions such as carbonate ions therefrom is initiated at a temperature of about 250°C.

For these reasons, when the hard materials using the chlorine-containing resins are subjected to processing work, water (water vapor) and carbon dioxide gas released from the hydrotalcite-based compounds tend to be sometimes foamed in the resins, thereby causing various problems such as poor appearance of products obtained therefrom and deterioration in durability and strength of the products.

In order to prevent occurrence of foaming in the resins, the hydrotalcite-based compound particles have been previously subjected to heat treatments to remove water that tends to be readily desorbed therefrom. However, since the amount of water required for causing the hydrotalcite-based compound particles to capture chlorine ions desorbed from the resins is reduced, there tend to arise problems such as promoted deterioration and carbonization of the resins as well as severe discoloration of the resins due to complexes of metals such as Mg, Al and Zn which are dissolved by attack of the desorbed chlorine ions against the surface of the hydrotalcite-based compound particles owing to a low chlorine ion capturing velocity. For this reason, in the method in which water is previously removed from the hydrotalcite-based compound particles, the allowable time capable of processing the resins tends to be extremely shortened, or kinds of metal soaps usable in the resin compositions are limited to an extremely narrow range, resulting in limited applications or products as well as obstacle to measures for rendering the resins harmless.

It is conventionally known that hydrotalcite-based compound particles are used as a stabilizer for chlorine-containing resins (Patent Documents 1 to 3). It is also known that the hydrotalcite-based compound particles are subjected to surface treatment with a silicon compound (Patent Documents 2 and 3).

Patent Document 1: PCT Pamphlet WO 99/01509
Patent Document 2: Japanese Patent Application Laid-open (KOKAI) No. 2000-290451
Patent Document 3: Japanese Patent Application Laid-open (KOKAI) No. 2003-231778

### DISCLOSURE OF THE INVENTION

### PROBLEM TO BE SOLVED BY THE INVENTION

The hydrotalcite-based compound particles described in the Patent Documents 1 to 3 tend to be not fully surface-coated with the silicon compound, and fail to exhibit an excellent function as the stabilizer for chlorine-containing resin compositions.

To solve the above conventional problems, an object or technical task of the present invention is to provide hydrotalcite-based compound particles which are improved in durability to attack of chlorine ions desorbed from the resins against the surface of the respective hydrotalcite-based compound particles.

### MEANS FOR SOLVING PROBLEM

The above object or technical task of the present invention can be achieved by the following aspects of the present invention.

That is, in a first aspect of the present invention, there is provided silicic acid-coated hydrotalcite-based compound particles comprising Mg-Al-based or Mg-Zn-Al-based hydrotalcite-based compound particles and a silicic acid coat formed on the respective Mg-Al-based or Mg-Zn-Al-based hydrotalcite-based compound particles in an amount of 0.25 to 15% by weight in terms of SiO₂ based on the weight of the Mg-Al-based or Mg-Zn-Al-based hydrotalcite-based compound particles, wherein the silicic acid-coated hydrotalcite-based compound particles have a specific surface area of 10 to 100 m²/g, and a difference in average pore diameter of the silicic acid-coated hydrotalcite-based compound particles between before and after subjected to heat treatment at 200°C for 1 hr [(average pore diameter of the particles before subjected to the heat treatment)-(average pore diameter of the particles after subjected to the heat treatment)] is 0 to 25 Å (first invention).

In a preferred embodiment of the first aspect of the present invention, a difference between a specific surface area of the Mg-Al-based or Mg-Zn-Al-based hydrotalcite-based compound particles and a specific surface area of the silicic acid-coated hydrotalcite-based compound particles [(specific surface area of the particles after coated with the silicic acid)-(specific surface area of the particles before coated with the silicic acid)] is 0 to 20 m²/g (second invention).

In a preferred embodiment of the first aspect of the present invention, the silicic acid-coated hydrotalcite-based compound particles as described in the first aspect of the present invention are obtained by drying the particles in a temperature range of 105 to 150°C (third invention).

In a preferred embodiment of the first aspect of the present invention, the silicic acid-coated hydrotalcite-based compound particles as described in the first aspect of the present invention are heat-treated at a temperature of 150 to 350°C (fourth invention).

In a second aspect of the present invention, there is provided a stabilizer for chlorine-containing resins comprising the silicic acid-coated hydrotalcite-based compound particles as described in the first aspect of the present invention (fifth invention).

In a third aspect of the present invention, there is provided a chlorine-containing resin composition comprising the silicic acid-coated hydrotalcite-based compound particles as described in the first aspect of the present invention and a chlorine-containing resin (sixth invention).

### EFFECT OF THE INVENTION

By using the silicic acid-coated hydrotalcite-based compound particles according to the present invention, it is possible to suppress attack of chlorine ions desorbed from the chlorine-containing resins against the surface of the respective hydrotalcite-based compound particles, and stabilize the resulting resin composition and prevent undesirable coloration thereof. Also, when the silicic acid-coated hydrotalcite-based compound particles are subjected to appropriate heat treatment, it is possible to suppress occurrence of foaming upon processing the resin compositions.

The resin composition of the present invention is prevented from suffering from undesirable coloration and has a high stability, in particular, can maintain the above properties even when it is a high hardness composition having a high processing temperature. Therefore, the resin composition is suitable as a chlorine-containing resin composition.

### PREFERRED EMBODIMENTS FOR CARRYING OUT THE INVENTION

The present invention is described in detail below. First, the silicic acid-coated hydrotalcite-based compound particles according to the present invention are described.

In the silicic acid-coated hydrotalcite-based compound particles according to the present invention, the hydrotalcite-based compound particles used as core particles are constituted from Mg, Al, Zn, etc., and are usually expressed by Mg-Al-based or Mg-Zn-Al-based hydrotalcite-based compound particles.

The composition of the hydrotalcite-based compound particles used in the present invention is not particularly limited. For example, a molar ratio of Mg to Al (Mg/Al) in the particles is preferably 1.0 to 3.5, and a molar ratio of Zn to a sum of Mg and Al in the Mg-Al-Zn-based particles is preferably 0.0010 to 0.20.

The amount of silicic acid (silicon oxide: compounds represented by the formula [SiOₓ(OH)₄₋₂ₓ]ₙ) coated on the surface of the respective hydrotalcite-based compound particles is 0.25 to 15% by weight in terms of SiO₂ based on the weight of the hydrotalcite-based compound particles. When the coating amount of the silicic acid is less than 0.25% by weight, the coating amount tends to be insufficient. On the other hand, when the coating amount of the silicic acid is more than 15% by weight, the silicic acid remaining after coated on the surface of the respective particles tends to be precipitated in the form of particles outside of the hydrotalcite-based compound particles, resulting in poor kneading with resins. The coating amount of the silicic acid is preferably 0.25 to 13% by weight and more preferably 0.3 to 12% by weight.

The silicic acid-coated hydrotalcite-based compound particles according to the present invention have a specific surface area of 10 to 100 m²/g. The silicic acid-coated hydrotalcite-based compound particles having a specific surface area of less than 10 m²/g tend to be difficult to produce industrially. When the specific surface area of the silicic acid-coated hydrotalcite-based compound particles is more than 100 m²/g, the silicic acid tends to be precipitated outside of the silicic acid-coated hydrotalcite-based compound particles. The specific surface area of the silicic acid-coated hydrotalcite-based compound particles is preferably 10 to 50 m²/g and more preferably 10 to 30 m²/g_{.}

Further, in the silicic acid-coated hydrotalcite-based compound particles according to the present invention, a difference in average pore diameter thereof between before and after subjected to heart treatment at 200°C for 1 hr [(average pore diameter of the particles before the heat treatment)-(average pore diameter of the particles after the heat treatment)] is 0 to 25 Å. When the difference in average pore diameter of the particles between before and after the heat treatment is less than 0 Å, the silicic acid tends to be precipitated in the form of particles outside of the silicic acid-coated hydrotalcite-based compound particles. When the difference in average pore diameter of the particles between before and after the heat treatment is more than 25 Å, the coating amount of the silicic acid on the hydrotalcite-based compound particles tends to be insufficient, resulting in poor stability and undesirable coloration of chlorine-containing resin compositions upon processing. The difference in average pore diameter of the particles between before and after the heart treatment is preferably 0 to 20 Å and more preferably 0.5 to 14.8 Å.

The average pore diameter of the silicic acid-coated hydrotalcite-based compound particles according to the present invention before subjected to heat treatment at 200°C for 1 hr is preferably 120 to 160 Å. When the average pore diameter of the silicic acid-coated hydrotalcite-based compound particles before the heat treatment is less than 120 Å, the silicic acid tends to be precipitated in the form of particles outside of the silicic acid-coated hydrotalcite-based compound particles. When the average pore diameter of the silicic acid-coated hydrotalcite-based compound particles before the heat treatment is more than 160 Å, the coating amount of the silicic acid on the hydrotalcite-based compound particles tends to be insufficient, resulting in poor stability and undesirable coloration of chlorine-containing resin compositions upon processing. The average pore diameter of the silicic acid-coated hydrotalcite-based compound particles before the heat treatment is more preferably 120 to 155 Å and still more preferably 120 to 150 Å

The average pore diameter of the silicic acid-coated hydrotalcite-based compound particles according to the present invention after heat-treated at 200°C for 1 hr is preferably 120 to 170 Å. When the average pore diameter of the silicic acid-coated hydrotalcite-based compound particles after the heat treatment is less than 120 Å, the silicic acid tends to be precipitated in the form of particles outside of the silicic acid-coated hydrotalcite-based compound particles. When the average pore diameter of the silicic acid-coated hydrotalcite-based compound particles after the heat treatment is more than 170 Å, the coating amount of the silicic acid on the hydrotalcite-based compound particles tends to be insufficient, resulting in poor stability and undesirable coloration of chlorine-containing resin compositions upon processing. The average pore diameter of the silicic acid-coated hydrotalcite-based compound particles after the heat treatment is more preferably 120 to 160 Å and still more preferably 120 to 150 Å.

The average plate surface diameter of the silicic acid-coated hydrotalcite-based compound particles according to the present invention is preferably 0.08 to 0.5 µm.

Next, the process for producing the silicic acid-coated hydrotalcite-based compound particles according to the present invention is described.

In the present invention, the hydrotalcite-based compound particles are preferably those particles obtained by subjecting the core particles to growth reaction under normal pressures (refer to Japanese Patent Application Laid-open (KOKAI) No. 2002-293535) or those particles produced in an autoclave at a temperature of 105 to 350°C. These hydrotalcite-based compound particles may be produced, for example, from a raw material such as metal sulfates, metal nitrates, metal chlorides or metal oxides comprising Mg, Al and Zn, an alkali such as sodium hydroxide and potassium hydroxide, and an anion source raw material such as sodium carbonate, basic magnesium carbonate and potassium carbonate.

In order to obtain the silicic acid-coated hydrotalcite-based compound particles, after producing the aimed hydrotalcite-based compound particles, a sufficiently diluted sodium silicate solution is dropped into the resulting reaction suspension. During the dropping, it is required to simultaneously add an acid to the suspension to control a pH thereof. Examples of the acid used above include sulfuric acid, acetic acid, oxalic acid and hydrochloric acid. The pH of the reaction suspension is preferably controlled to 8.5 to 10 and more preferably 8.5 to 9.5. The time required for controlling the pH of the suspension by simultaneously adding sodium silicate and the acid thereto is not particularly limited, and is usually 0.5 to 3 hr. When the pH controlling time is less than 0.5 hr, the silicic acid tends to be precipitated in the form of particles outside of the hydrotalcite-based compound particles. When the pH controlling time is more than 3 hr, silicic acid ions tend to be intercalated between layers of the hydrotalcite-based compound particles, resulting in deteriorated stability of the obtained chlorine-containing resin composition. The pH controlling time is preferably 0.5 to 2 hr and more preferably 0.75 to 1.5 hr.

Meanwhile, when the pH of the reaction suspension is out of the above specified range, it is required to control the pH value with the acid before dropping the sodium silicate solution thereinto.

After simultaneously dropping the sodium silicate solution and the acid into the suspension, the resulting suspension is aged usually for 0.5 to 2 hr. When the aging time is less than 0.5 hr, if the concentration of the sodium silicate solution is high and the dropping time is short, the silicic acid tends to be precipitated in the form of particles outside of the silicic acid-coated hydrotalcite-based compound particles. When the aging time is more than 2 hr, silicic acid ions tend to be intercalated between layers of the hydrotalcite-based compound particles, resulting in deteriorated stability of the obtained chlorine-containing resin composition. The aging time is preferably 0.5 to 1.75 hr and more preferably 0.5 to 1.5 hr.

The concentration of the sufficiently diluted sodium silicate solution to be dropped is usually 1 to 100 g/L in terms of SiO₂. The concentration of the sodium silicate solution of less than 1 g/L is unpractical because the total reaction capacity tends to be too large. When the concentration of the sodium silicate solution is more than 100 g/L, the silicic acid tends to be precipitated in the form of particles outside of the silicic acid-coated hydrotalcite-based compound particles. The concentration of the sodium silicate solution is preferably 5 to 75 g/L and more preferably 10 to 50 g/L.

The temperature of the reaction suspension upon simultaneously dropping the sodium silicate solution and the acid thereinto is usually 50 to 100°C. When the temperature of the reaction suspension is less than 50°C, the silicic acid tends to be precipitated in the form of particles outside of the silicic acid-coated hydrotalcite-based compound particles. When the temperature of the reaction suspension is more than 100°C, the use of a pressure vessel such as an autoclave tends to be required, and silicic acid ions tend to be intercalated between layers of the hydrotalcite-based compound particles, resulting in deteriorated stability of the obtained chlorine-containing resin composition. The temperature of the reaction suspension is preferably 60 to 90°C and more preferably 70 to 90°C.

The thus obtained silicic acid-coated hydrotalcite-based compound particles are then dried at a temperature of usually 105 to 150°C. When the drying temperature is less than 105°C, foaming tends to be caused inside of the resins owing to a large amount of water contained in the silicic acid, and further a prolonged drying time tends to be required, resulting in uneconomical process. When the drying temperature is more than 150°C, the effect of suppressing deterioration of resins when used as a stabilizer for soft to semi-hard chlorine-containing resin compositions tends to be lowered. The drying temperature when using the silicic acid-coated hydrotalcite-based compound particles as the stabilizer for soft to semi-hard chlorine-containing resin compositions is preferably 105 to 130°C. The drying may be performed for a necessary time by controlling an amount of the particles to be dried or using a suitable drying method, and the drying time is preferably 3 to 24 hr.

In the silicic acid-coated hydrotalcite-based compound particles according to the present invention, the difference between a specific surface area of the hydrotalcite-based compound particles before coated with the silicic acid and a specific surface area of the silicic acid-coated hydrotalcite-based compound particles [(specific surface area of the particles before coated with the silicic acid)-(specific surface area of the particles after coated with the silicic acid)] is preferably 0 to 20 m²/g. Since the specific surface area of the particles after coated with the silicic acid is always larger than the specific surface area of the particles before coated with the silicic acid, the difference between the specific surface areas of the particles before and after coated with the silicic acid is never decreased to less than 0 m²/g. When the difference between the specific surface areas of the particles before and after coated with the silicic acid is more than 20 m²/g, the silicic acid tends to be precipitated in the form of particles outside of the silicic acid-coated hydrotalcite-based compound particles. The difference between the specific surface areas of the hydrotalcite-based compound particles before and after coated with the silicic acid is preferably 0 to 18 m²/g and more preferably 2 to 15 m²/g. When the resins are to be kneaded, the specific surface area of the silicic acid-coated hydrotalcite-based compound particles is preferably small, and the difference between the specific surface areas of the particles before and after coated with the silicic acid is preferably large.

The silicic acid-coated hydrotalcite-based compound particles according to the present invention are heat-treated at a temperature of 150 to 350°C, thereby further enhancing a stability of the chlorine-containing resin compositions upon processing or suppressing undesirable coloration and foaming of the compositions. When the heat-treating temperature is less than 150°C, it may be difficult to attain the effect of further enhancing a stability of the chlorine-containing resin compositions upon processing or suppressing undesirable coloration and foaming of the compositions. When the heat-treating temperature is more than 350°C, excessive amounts of water or anions such as carbonate ions tend to be desorbed from the hydrotalcite-based compound, so that the obtained chlorine-containing resin compositions tend to be considerably deteriorated in stability. When used as a stabilizer for semi-hard to hard chlorine-containing resin compositions, the heat-treating temperature of the silicic acid-coated hydrotalcite-based compound particles is preferably 160 to 330°C and more preferably 170 to 300°C.

Meanwhile, upon heat-treating the silicic acid-coated hydrotalcite-based compound particles, it is required that the heat-treating temperature is somewhat high and the heat-treating time is somewhat long as compared to the case where the uncoated hydrotalcite-based compound particles solely are subjected to heat treatment. The heat-treating time of the silicic acid-coated hydrotalcite-based compound particles is not particularly limited, and is usually 0.5 to 5 hr, preferably 0.5 to 4 hr and more preferably 1 to 3 hr from the viewpoint of facilitated industrial production thereof. The heat-treating atmosphere is not particularly limited, and the heat treatment is preferably performed in an atmospheric air.

Next, the stabilizer for chlorine-containing resins and the chlorine-containing resin composition according to the present invention are described.

The silicic acid-coated hydrotalcite-based compound particles as defined by any of the first to fourth inventions can be used as a stabilizer for chlorine-containing resins by incorporating the particles in a chlorine-containing resin composition.

The chlorine-containing resin composition of the present invention preferably comprises 100 parts by weight of a chlorine-containing resin and 0.1 to 10 parts by weight of the silicic acid-coated hydrotalcite-based compound particles. When the content of the silicic acid-coated hydrotalcite-based compound particles in the composition is less than 0.1 part by weight, the effect of the particles as the stabilizer tends to be lowered. When the content of the silicic acid-coated hydrotalcite-based compound particles in the composition is more than 10 part by weight, the above effect as the stabilizer tends to be already saturated owing to more than necessary amount of the particles used, resulting in unnecessary waste of the material. Further, if the hydrotalcite-type particles are added in more than necessary amount, the obtained resin composition tends to suffer from foaming, resulting in adverse influences such as poor appearance and early coloration thereof.

In addition, a plasticizer or other stabilizers and additives may be added to the chlorine-containing resins, if required.

Examples of the suitable plasticizer include trimellitic acid ester-based plasticizers such as trioctyl trimellitate (TOTM) and tri-n-octyl-n-decyl trimellitate, phthalic acid ester-based plasticizers such as diisodecyl phthalate (DIDP), diisononyl phthalate (DINP) and di-2-ethylhexyl phthalate (DOP), and polyester-based plasticizers such as polypropylene adipate and polypropylene sebacate.

Examples of the suitable other stabilizers include zinc compounds such as zinc stearate, zinc laurate and zinc ricinoleate; β-diketones such as dibenzoyl methane, stearoyl benzoyl methane and dehydroacetic acid; phosphates or phosphites such as alkyl allyl phosphates and trialkyl phosphates; polyhydric alcohol-based compounds such as dipentaerythritol, pentaerythritol, glycerol, diglycerol and trimethylol propane; higher fatty acids such as stearic acid, lauric acid and oleic acid; and epoxy-based compounds such as epoxidized linseed oil and epoxidized soybean oil.

Examples of the other additives include antioxidants such as phenol-based compounds, amine-based compounds and phosphoric acid-based compounds; gelling promoters such as those compounds obtained by replacing a terminal end of polyesters with a OH group, acrylonitrile-styrene copolymers and methyl methacrylate-styrene copolymers; fillers such as calcium carbonate, silica, glass beads, mica and glass fibers; flame retardants such as inorganic flame retardants, e.g., antimony trioxide, aluminum hydroxide and zinc borate, bromine-containing organic flame retardants and halogen-containing phosphoric acid ester-based flame retardants; lubricants such as stearic acid, polyethylene wax, calcium stearate, magnesium stearate and barium stearate; and mildew-proof agents such as Triclosan, Orthocide, Sanaisole 100 and Sanaisole 300.

When the silicic acid-coated hydrotalcite-based compound particles are used in the chlorine-containing resin composition, the surface of the respective particles is preferably treated with at least one compound selected from the group consisting of higher fatty acids, anionic surfactants, phosphoric acid esters of higher fatty acids, coupling agents and polyhydric alcohol esters. With the surface treatment, the chlorine-containing resin composition can be further improved in stability.

Examples of the higher fatty acids include lauric acid, stearic acid, palmitic acid, oleic acid and linolic acid. Examples of the phosphoric acid esters of higher fatty acids include stearyl ether phosphate, oleyl ether phosphate and lauryl ether phosphate. Examples of the polyhydric alcohol esters include sorbitan monooleate, sorbitan monolaurate and stearic acid monoglyceride.

Examples of the anionic surfactants include salts such as sodium laurylsulfate, sodium dodecylbenzenesulfonate, sodium stearate, potassium oleate and potassium castor oil.

Examples of the coupling agents include silane-based, aluminum-based, titanium-based and zirconium-based coupling agents.

The method for treating the silicic acid-coated hydrotalcite-based compound particles with the above surface-treating agents is not particularly limited. The hydrotalcite-based compound particles may be coated with silicic acid and then subjected to wet reaction with the surface-treating agents. Alternatively, the hydrotalcite-based compound particles coated with the silicic acid particles may be subjected to dry surface treatment with the surface-treating agents using a Henschel mixer, etc., or may be simply mixed with the surface-treating agents. Upon the dry surface treatment or when being simply mixed, the hydrotalcite-based compound particles coated with the silicic acid particles may be treated with the surface-treating agents previously heat-treated at a temperature of 150 to 350°C. If required, the thus surface-treated particles may be further subjected to heat treatment at a temperature of not higher than 250°C.

When the chlorine-containing resin composition using the silicic acid-coated hydrotalcite-based compound particles according to the present invention is used as a hard material comprising no plasticizer, the composition exhibits the following properties.

That is, in the chlorine-containing resin composition comprising 100 parts by weight of "Taiyo PVC TH1000" produced by Taiyo Vinyl Chloride Co., Ltd., as a chlorine-containing resin (polymerization degree: 1000), 1 part by weight of the hydrotalcite-based compound particles of the present invention (heat-treated at 210°C) and 0.1 to 0.3 part by weight of zinc stearate (general reagent), the time required until reaching Level 7 as shown in the below-mentioned coloration level is not shorter than 40 min when the composition comprises 0.3 part by weight of zinc stearate, and the time required until reaching Level 4 as shown in the below-mentioned coloration level is not shorter than 30 min when the composition comprises 0.1 to 0.2 part by weight of zinc stearate.

Also, when the chlorine-containing resin composition using the silicic acid-coated hydrotalcite-based compound particles according to the present invention is used as a semi-hard material comprising a small amount of a plasticizer, the composition exhibits the following properties.

That is, in the chlorine-containing resin composition comprising 100 parts by weight of "Taiyo PVC TH1000" produced by Taiyo Vinyl Chloride Co., Ltd., as a chlorine-containing resin (polymerization degree: 1000), 25 parts by weight of di-2-ethylhexyl phthalate ("DOP" produced by Dai-Hachi Kagaku Co., Ltd.), 1 part by weight of the hydrotalcite-based compound particles of the present invention (heat-treated at 210°C) and 0.1 to 0.35 part by weight of zinc stearate (general reagent), the time required until reaching Level 7 as shown in the below-mentioned coloration level is not shorter than 25 min when the composition comprises 0.3 part by weight of zinc stearate, and the time required until reaching Level 4 as shown in the below-mentioned coloration level is not shorter than 20 min when the composition comprises 0.1 part by weight of zinc stearate.

Further, when the chlorine-containing resin composition using the silicic acid-coated hydrotalcite-based compound particles according to the present invention is used as a soft to semi-hard material comprising a plasticizer, the composition exhibits the following properties.

That is, in the chlorine-containing resin composition comprising 100 parts by weight of "Taiyo PVC TH1000" produced by Taiyo Vinyl Chloride Co., Ltd., as a chlorine-containing resin (polymerization degree: 1000), 35 parts by weight of di-2-ethylhexyl phthalate ("DOP" produced by Dai-Hachi Kagaku Co., Ltd.), 2 to 3 parts by weight of the hydrotalcite-based compound particles of the present invention (heat-treated at 210°C) and 0.4 part by weight of zinc stearate (general reagent), the time required until reaching Level 7 as shown in the below-mentioned coloration level is not shorter than 30 min, and the time required until reaching Level 5 as shown in the below-mentioned coloration level is not shorter than 20 min.

Next, the process for producing the chlorine-containing resin composition according to the present invention is described.

The chlorine-containing resin composition according to the present invention may be produced by an ordinary method. For example, in the case where the composition is formed into a kneaded sheet, the resin, the silicic acid-coated hydrotalcite-based compound particles, and various stabilizers and additives described above, are mixed with each other at predetermined proportions, and the resulting mixture is kneaded by heated rolls to obtain a kneaded sheet. Then, the obtained sheet is subjected to pressing treatment using a hot press, thereby obtaining the aimed kneaded sheet. The kneading temperature of the heated rolls varies depending upon the resin or resin composition used, and is preferably 140 to 300°C. The pressing temperature of the hot press is preferably 145 to 320°C.

### <Function>

When the silicic acid-coated hydrotalcite-based compound particles according to the present invention are used in chlorine-containing resins, the attack of chlorine ions desorbed from the chlorine-containing resins against the surface of the respective hydrotalcite-based compound particles can be well suppressed, so that the resulting chlorine-containing resin composition can be stabilized and prevented from suffering from undesirable coloration.

That is, the attack of the chlorine ions desorbed from the chlorine-containing resins against the surface of the respective hydrotalcite-based compound particles causes Mg, Zn or Al as a constituent element of the hydrotalcite-based compound particles to be dissolved and form a complex with organic substances contained in the resin composition or produced by decomposition of the resin composition, resulting in undesirable coloration of the resin composition. Simultaneously, the hydrotalcite-based compound particles are dissolved, so that the chlorine-containing resin composition tends to be deteriorated in stability. When using the silicic acid-coated hydrotalcite-based compound particles according to the present invention in the chlorine-containing resin composition, the chlorine ions desorbed from the chlorine-containing resins attack not the surface of the respective hydrotalcite-based compound particles but the silicic acid coat formed on the respective particles. Thus, the silicic acid coat can further enhance a durability of the particles against the attack of the chlorine ions. As a result, Mg, Zn or Al as a constituent element of the hydrotalcite-based compound particles is hardly dissolved, so that the resin composition can be stabilized and prevented from suffering from undesirable coloration.

In addition, by adequately heat-treating the silicic acid-coated hydrotalcite-based compound particles, the resulting resin composition can be prevented from being foamed upon processing.

### EXAMPLES

The present invention is described in more detail below by Examples. However, the following Examples are only illustrative and not intended to limit the scope of the present invention. The measuring methods used in the present invention are as follows.

### (1) Shape and size of particles:

The shape and size of the particles were measured using a transmission electron microscope "JEM-1200EXII" manufactured by Nippon Denshi Co., Ltd.

### (2) Contents of respective elements:

The contents of the respective elements were determined by dissolving a sample with an acid and analyzing the resulting solution with yttrium as an internal standard using a plasma emission spectroscopic analyzer "iCAP6500" manufactured by Thermo-Electron Co., Ltd.

### (3) Identification of constituent phase:

The constituent phase was identified using a powder X-ray diffraction apparatus "RINT-2500" manufactured by Rigaku Co., Ltd. The measurement was conducted under the conditions including a diffraction angle 2θ of 3 to 80°, a step angle of 0.03° and a FT of 0.3 sec by using Cu as a radiation source.

### (4) Specific surface area:

The specific surface area of the particles was measured by a B.E.T. method using nitrogen.

### (5) Thermal stability test:

First, a test piece was prepared by the following method. The resin composition was kneaded using a 6-inch twin roll-type kneader to form a sheet. The kneading temperature was controlled to a temperature range of 140 to 190°C according to the resin composition used, and the kneading time was set to 5 min.

Next, the sheet obtained by the above roll-kneading was subjected to compression-molding. The compression- molding was performed using a compression-molding machine equipped with a 70-t automatic press (ram area: 210 cm²) as a heating press and a 30-t manual press (ram area: 180 cm²) as a cooling press such that the sheet was successively subjected to pre-heating (under no pressure) for 2 min and pressing (under 6.3 MPa) for 2 min at a temperature of 140 to 190°C, and further to cooling (under 3.1 MPa) for 3 min, thereby obtaining a compression-molded product (pressed sheet) having a size of 200 mm x 200 mm x 1 to 1.5 mm.

The thermal stability test was performed by using a Geer oven "102-SHF-77S" manufactured by Yasuda Seiki Seisakusho Co., Ltd. The pressed sheet was cut into a test piece having a size of 30 mm x 30 mm. The obtained test piece was placed on a glass plate and subjected to the test at 180°C for 80 min. During the test, the two test pieces per one sample were taken out every 10 min and attached onto a recording paper.

The respective test pieces were measured using a colorimeter "X-Rite 939" manufactured by X-Rite, Inc., to determine L*, a* and b* thereof. The coloration level of the pressed sheet and the test pieces for thermal stability test was defined by the following Levels 1 to 7.

**Table 1**

| |
|---|
| Level 1: Substantially no coloration was recognized Level 2: Slight red and/or yellow coloration was recognized Level 3: Light brown coloration was recognized Level 4: Brown coloration was recognized Level 5: Dark brown coloration was recognized Level 6: Partially carbonized or blackened Level 7: Entirely carbonized or blackened |

### Example 1:

### (Production of hydrotalcite-based compound particles)

Magnesium sulfate heptahydrate crystals and aluminum sulfate octahydrate crystals were weighed in amounts of 272.43 g and 95.98 g, respectively, and then dissolved in pure water to prepare a solution having a total volume of 1 L. Separately, 50.20 g of sodium carbonate crystals were dissolved in pure water to prepare 500 mL of a solution, and further the resulting solution was mixed with 254.6 mL of a sodium hydroxide aqueous solution (12 N) and pure water to prepared an alkali aqueous solution having a total volume of 2 L. The thus obtained alkali aqueous solution was heated to 50°C, and then the previously prepared mixed aqueous solution of magnesium and aluminum was charged into the alkali aqueous solution, followed by stirring the obtained solution at 70°C for 4 hr. The resulting solution was transferred into an autoclave and aged therein at 135°C for 10 hr while stirring. As a result, it was confirmed that the obtained hydrotalcite-based compound particles had a specific surface area of 13.0 m²/g.

### (Production of silicic acid-coated hydrotalcite-based compound particles)

Successively, the thus obtained reaction suspension was heated to 67°C while stirring, and sulfuric acid was added thereto to control a pH of the suspension to 9.3. Then, 169.5 mL of a sodium silicate solution having a SiO₂ concentration of 20 g/L and 0.5 N sulfuric acid were simultaneously dropped to the suspension over 1.2 hr.
During the dropping, the pH of the reaction suspension was maintained at 9.3. Further, the reaction suspension was aged for 0.75 hr. The reaction suspension was filtered to recover the silicic acid-coated hydrotalcite-based compound particles therefrom, and the recovered particles were washed with water and then dried at 125°C for 8 hr.

As a result, it was confirmed that the thus obtained silicic acid-coated hydrotalcite-based compound particles had a specific surface area of 15.5 m²/g, and the difference in BET specific surface area of the particles between before and after coated with silicic acid [(specific surface area of the particles after coated with silicic acid)-(specific surface area of the particles before coated with silicic acid)] was 2.5 m²/g. As a result of analyzing the obtained particles, it was confirmed that the Mg/Al ratio and the amount of the silicic acid coat (in terms of SiO₂) based on the hydrotalcite-based compound particles were 2.78 and 3.0% by weight, respectively, which were substantially identical to those of the charged materials, and the average pore diameter of the particles was 142.0 Å. Further, it was confirmed that the silicic acid coated on the particles was amorphous silicic acid incapable of being detected by XRD.

A part of the thus obtained silicic acid-coated hydrotalcite-based compound particles were heat-treated at 200°C for 1 hr. As a result, it was confirmed that the thus heat-treated particles had an average pore diameter of 132.4 Å

In order to further confirm the condition of silicic acid, the obtained silicic acid-coated hydrotalcite-based compound particles only were dissolved by adjusting a pH of the suspension to 3 with a sulfuric acid aqueous solution. As a result, it was confirmed that the silicic acid was present only in the form of hollow particles having a shape and size substantially consistent with those of the original hydrotalcite-based compound particles, and no silicic acid was recognized outside of the silicic acid-coated hydrotalcite-based compound particles. From these facts, it was confirmed that a whole amount of the silicon material added was precipitated, attached and coated on the surface of the respective hydrotalcite-based compound particles in the form of an amorphous silicic acid incapable of being detected by XRD.

### (Production and evaluation of chlorine-containing resin composition)

The silicic acid-coated hydrotalcite-based compound particles were heat-treated at 210°C for 1 hr, and then subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (semi-hard composition).

**Table 2**

| | |
|---|---|
| Chlorine-containing resin composition | 100 phr |
| Di-2-ethylhexyl phthalate | 25 phr |
| Zinc stearate | 0.3 phr |
| The above silicic acid-coated hydrotalcite-based compound particles | 1.5 phr |

The above raw materials were kneaded using rolls at 178°C for 5 min, and then subjected to compression-molding/pressing treatment at 178°C, thereby obtaining a pressed sheet. It was confirmed that no foaming was caused in the thus obtained sheet. Also, it was confirmed that the obtained sheet had a b* value of 40.8, and the time required until reaching Level 4 was 25 min, and the time required until reaching Level 7 was 40 min.

### Example 2:

The silicic acid-coated hydrotalcite-based compound particles (after heat-treated at 210°C for 1 hr) obtained in Example 1 were subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (hard composition).

**Table 3**

| | |
|---|---|
| Chlorine-containing resin composition | 100 phr |
| Zinc stearate | 0.2 phr |
| The above silicic acid-coated hydrotalcite-based compound particles | 1 phr |

The above raw materials were kneaded using rolls at 180°C for 5 min, and then subjected to compression-molding/pressing treatment at 180°C, thereby obtaining a pressed sheet. It was confirmed that no foaming was caused in the thus obtained sheet. Also, it was confirmed that the obtained sheet had a b* value of 39.4, and the time required until reaching Level 4 was 30 min, and the time required until reaching Level 7 was 70 min.

### Example 3:

Magnesium nitrate hexahydrate crystals and aluminum nitrate nonahydrate crystals were weighed in amounts of 315.02 g and 214.36 g, respectively, and then dissolved in pure water to prepare a solution having a total volume of 1 L. Separately, 72.67 g of sodium carbonate crystals were dissolved in pure water to prepare 500 mL of a solution, and further the resulting solution was mixed with 278.1 mL of a sodium hydroxide aqueous solution (12 N) and pure water to prepared an alkali aqueous solution having a total volume of 2 L. The thus obtained alkali aqueous solution was heated to 50°C, and then the previously prepared mixed aqueous solution of magnesium and aluminum was charged into the alkali aqueous solution, followed by stirring the obtained solution at 70°C for 4 hr. The resulting solution was transferred into an autoclave and aged therein at 160°C for 8 hr while stirring. As a result, it was confirmed that the obtained hydrotalcite-based compound particles had a specific surface area of 12.5 m²/g.

Successively, the thus obtained reaction suspension was heated to 82°C while stirring, and sulfuric acid was added thereto to control a pH of the suspension to 8.8. Then, 379.5 mL of a sodium silicate solution having a SiO₂ concentration of 43 g/L and 0.5 N sulfuric acid were simultaneously dropped to the suspension over 2 hr. During the dropping, the pH of the reaction suspension was maintained at 8.8. Further, the reaction suspension was aged for 0.5 hr. The reaction suspension was filtered to recover the silicic acid-coated hydrotalcite-based compound particles therefrom, and the recovered particles were washed with water and then dried at 130°C for 13 hr.

As a result, it was confirmed that the thus obtained silicic acid-coated hydrotalcite-based compound particles had a specific surface area of 21.3 m²/g, and the difference in BET specific surface area of the particles between before and after coated with silicic acid [(specific surface area of the particles after coated with silicic acid)-(specific surface area of the particles before coated with silicic acid)] was 8.8 m²/g. As a result of analyzing the obtained particles, it was confirmed that the Mg/Al ratio and the amount of SiO₂ based on the hydrotalcite-based compound particles were 2.15 and 11.8% by weight, respectively, which were substantially identical to those of the charged materials, and the average pore diameter of the particles was 141.9 Å. Further, it was confirmed that the silicic acid coated on the particles was amorphous silicic acid incapable of being detected by XRD.

In order to further confirm the condition of silicic acid, the obtained silicic acid-coated hydrotalcite-based compound particles only were dissolved by adjusting a pH of the suspension to 3 with a sulfuric acid aqueous solution. As a result, it was confirmed that the silicic acid was present only in the form of hollow particles having a shape and size substantially consistent with those of the original hydrotalcite-based compound particles, and no silicic acid was recognized outside of the silicic acid-coated hydrotalcite-based compound particles. From these facts, it was confirmed that a whole amount of the silicon material added was precipitated, attached and coated on the surface of the respective hydrotalcite-based compound particles in the form of an amorphous silicic acid incapable of being detected by XRD.

A part of the thus obtained silicic acid-coated hydrotalcite-based compound particles were heat-treated at 200°C for 1 hr. As a result, it was confirmed that the thus heat-treated particles had an average pore diameter of 127.7 Å

The silicic acid-coated hydrotalcite-based compound particles were heat-treated at 210°C for 1 hr, and then subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (hard composition).

**Table 4**

| | |
|---|---|
| Chlorine-containing resin composition | 100 phr |
| Zinc stearate | 0.1 phr |
| The above silicic acid-coated hydrotalcite-based compound particles | 1 phr |

The above raw materials were kneaded using rolls at 182°C for 5 min, and then subjected to compression-molding/pressing treatment at 182°C, thereby obtaining a pressed sheet. It was confirmed that no foaming was caused in the thus obtained sheet. Also, it was confirmed that the obtained sheet had a b* value of 45.2, and the time required until reaching Level 4 was 35 min, and the time required until reaching Level 7 was 65 min.

### Example 4:

Magnesium sulfate heptahydrate crystals, aluminum sulfate octahydrate crystals and zinc sulfate heptahydrate crystals were weighed in amounts of 169.71 g, 95.66 g and 33.94 g, respectively, and then dissolved in pure water to prepare a solution having a total volume of 1 L. Separately, 66.72 g of sodium carbonate crystals were dissolved in pure water to prepare 500 mL of a solution, and further the resulting solution was mixed with 176.9 mL of a sodium hydroxide aqueous solution (12 N) and pure water to prepared an alkali aqueous solution having a total volume of 2 L.
The thus obtained alkali aqueous solution was heated to 50°C, and then the previously prepared mixed aqueous solution of magnesium and aluminum was charged into the alkali aqueous solution, followed by stirring the obtained solution at 70°C for 4 hr. The resulting solution was transferred into an autoclave and aged therein at 150°C for 12 hr while stirring. As a result, it was confirmed that the obtained hydrotalcite-based compound particles had a specific surface area of 10.1 m²/g.

Successively, the thus obtained reaction suspension was heated to 85°C while stirring, and sulfuric acid was added thereto to control a pH of the suspension to 8.7. Then, 195.0 mL of a sodium silicate solution having a SiO₂ concentration of 35 g/L and 0.5 N sulfuric acid were simultaneously dropped to the suspension over 2 hr. During the dropping, the pH of the reaction suspension was maintained at 8.7. Further, the reaction suspension was aged for 1 hr. The reaction suspension was filtered to recover the silicic acid-coated hydrotalcite-based compound particles therefrom, and the recovered particles were washed with water and then dried at 120°C for 15 hr.

As a result, it was confirmed that the thus obtained silicic acid-coated hydrotalcite-based compound particles had a specific surface area of 16.3 m²/g, and the difference in BET specific surface area of the particles between before and after coated with silicic acid [(specific surface area of the particles after coated with silicic acid)-(specific surface area of the particles before coated with silicic acid)] was 6.2 m²/g. As a result of analyzing the obtained particles, it was confirmed that the Mg/Al ratio, the Zn/Al ratio and the amount of SiO₂ based on the hydrotalcite-based compound particles were 1.57, 0.3 and 7.5% by weight, respectively, which were substantially identical to those of the charged materials, and the average pore diameter of the particles was 146.4 Å. Further, it was confirmed that the silicic acid coated on the particles was amorphous silicic acid incapable of being detected by XRD.

In order to further confirm the condition of silicic acid, the obtained silicic acid-coated hydrotalcite-based compound particles only were dissolved by adjusting a pH of the suspension to 3 with a sulfuric acid aqueous solution. As a result, it was confirmed that the silicic acid was present only in the form of hollow particles having a shape and size substantially consistent with those of the original hydrotalcite-based compound particles, and no silicic acid was recognized outside of the silicic acid-coated hydrotalcite-based compound particles. From these facts, it was confirmed that a whole amount of the silicon material added was precipitated, attached and coated on the surface of the respective hydrotalcite-based compound particles in the form of an amorphous silicic acid incapable of being detected by XRD.

A part of the thus obtained silicic acid-coated hydrotalcite-based compound particles were heat-treated at 200°C for 1 hr. As a result, it was confirmed that the thus heat-treated particles had an average pore diameter of 138.9 Å.

The silicic acid-coated hydrotalcite-based compound particles were heat-treated at 210°C for 1 hr, and then subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (hard composition).

**Table 5**

| | |
|---|---|
| Chlorine-containing resin composition | 100 phr |
| Zinc stearate | 0.1 phr |
| The above silicic acid-coated hydrotalcite-based compound particles | 1 phr |

The above raw materials were kneaded using rolls at 180°C for 5 min, and then subjected to compression-molding/pressing treatment at 180°C, thereby obtaining a pressed sheet. It was confirmed that no foaming was caused in the thus obtained sheet. Also, it was confirmed that the obtained sheet had a b* value of 41.2, and the time required until reaching Level 4 was 40 min, and the time required until reaching Level 7 was 55 min.

### Example 5:

Magnesium sulfate heptahydrate crystals and aluminum sulfate octahydrate crystals were weighed in amounts of 332.75 g and 109.42 g, respectively, and then dissolved in pure water to prepare a solution having a total volume of 0.7 L. Separately, 41.73 g of sodium carbonate crystals were dissolved in pure water to prepare 500 mL of a solution, and further the resulting solution was mixed with 754.1 mL of a sodium hydroxide aqueous solution (12 N) and pure water to prepared an alkali aqueous solution having a total volume of 1.7 L. The thus obtained alkali aqueous solution was heated to 50°C, and then the previously prepared mixed aqueous solution of magnesium and aluminum was charged into the alkali aqueous solution, followed by stirring the obtained solution at 95°C for 8 hr. Next, 0.3 L of a mixed aqueous solution separately prepared by dissolving 78.5 g of magnesium sulfate heptahydrate crystals and 38.72 g of aluminum sulfate octahydrate crystals was dropped to the resulting reaction suspension at 95°C, and then the obtained suspension was aged at 95°C for 6 hr. As a result, it was confirmed that the obtained hydrotalcite-based compound particles had a specific surface area of 14.1 m²/g.

Successively, the thus obtained reaction suspension was heated to 80°C while stirring, and sulfuric acid was added thereto to control a pH of the suspension to 9.4. Then, 344.0 mL of a sodium silicate solution having a SiO₂ concentration of 50 g/L and 0.5 N sulfuric acid were simultaneously dropped to the suspension over 0.5 hr.
During the dropping, the pH of the reaction suspension was maintained at 9.4. Further, the reaction suspension was aged for 1 hr. The reaction suspension was filtered to recover the silicic acid-coated hydrotalcite-based compound particles therefrom, and the recovered particles were washed with water and then dried at 120°C for 10 hr.

As a result, it was confirmed that the thus obtained silicic acid-coated hydrotalcite-based compound particles had a specific surface area of 21.2 m²/g, and the difference in BET specific surface area of the particles between before and after coated with silicic acid [(specific surface area of the particles after coated with silicic acid)-(specific surface area of the particles before coated with silicic acid)] was 7.1 m²/g. As a result of analyzing the obtained particles, it was confirmed that the Mg/Al ratio and the amount of SiO₂ based on the hydrotalcite-based compound particles were 2.83 and 9.9% by weight, respectively, which were substantially identical to those of the charged materials, and the average pore diameter of the particles was 134.9 Å. Further, it was confirmed that the silicic acid coated on the particles was amorphous silicic acid incapable of being detected by XRD.

In order to further confirm the condition of silicic acid, the obtained silicic acid-coated hydrotalcite-based compound particles only were dissolved by adjusting a pH of the suspension to 3 with a sulfuric acid aqueous solution. As a result, it was confirmed that the silicic acid was present only in the form of hollow particles having a shape and size substantially consistent with those of the original hydrotalcite-based compound particles, and no silicic acid was recognized outside of the silicic acid-coated hydrotalcite-based compound particles. From these facts, it was confirmed that a whole amount of the silicon material added was precipitated, attached and coated on the surface of the respective hydrotalcite-based compound particles in the form of an amorphous silicic acid incapable of being detected by XRD.

A part of the thus obtained silicic acid-coated hydrotalcite-based compound particles were heat-treated at 200°C for 1 hr. As a result, it was confirmed that the thus heat-treated particles had an average pore diameter of 130.4 Å.

The silicic acid-coated hydrotalcite-based compound particles were heat-treated at 210°C for 1 hr, and then subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (soft to semi-hard composition).

**Table 6**

| | |
|---|---|
| Chlorine-containing resin composition | 100 phr |
| Di-2-ethylhexyl phthalate | 32.5 phr |
| Zinc stearate | 0.4 phr |
| The above silicic acid-coated hydrotalcite-based compound particles | 2.3 phr |

The above raw materials were kneaded using rolls at 173°C for 5 min, and then subjected to compression-molding/pressing treatment at 173°C, thereby obtaining a pressed sheet. It was confirmed that no foaming was caused in the thus obtained sheet. Also, it was confirmed that the obtained sheet had a b* value of 63.3, and the time required until reaching Level 5 was 25 min, and the time required until reaching Level 7 was 40 min.

### Example 6:

Magnesium sulfate heptahydrate crystals and aluminum sulfate octahydrate crystals were weighed in amounts of 338.03 g and 133.38 g, respectively, and then dissolved in pure water to prepare a solution having a total volume of 650 mL. Separately, 110.11 g of sodium carbonate crystals were dissolved in pure water to prepare 500 mL of a solution, and further the resulting solution was mixed with 411.4 mL of a sodium hydroxide aqueous solution (12 N) and pure water to prepared an alkali aqueous solution having a total volume of 1.65 L. The thus obtained alkali aqueous solution was heated to 70°C, and then the previously prepared mixed aqueous solution of magnesium and aluminum was charged into the alkali aqueous solution, followed by stirring the obtained solution at 95°C for 4 hr. In addition, magnesium sulfate heptahydrate crystals and aluminum sulfate octahydrate crystals were weighed in amounts of 84.51 g and 33.34 g, respectively, and then dissolved in pure water to prepare an aqueous solution having a total volume of 350 mL. The thus prepared aqueous solution was dropped to the above-obtained reaction suspension at 95°C over 1 h, and then the obtained suspension was aged for 2 h. The resulting suspension was transferred into an autoclave and aged therein at 148°C for 8 hr while stirring. As a result, it was confirmed that the obtained hydrotalcite-based compound particles had a specific surface area of 11.5 m²/g.

Successively, the thus obtained reaction suspension was heated to 77°C while stirring, and sulfuric acid was added thereto to control a pH of the suspension to 9.1. Then, 182.0 mL of a sodium silicate solution having a SiO₂ concentration of 30 g/L and 0.5 N sulfuric acid were simultaneously dropped to the suspension over 1 hr. During the dropping, the pH of the reaction suspension was maintained at 9.1. Further, the reaction suspension was aged for 1 hr. The reaction suspension was filtered to recover the silicic acid-coated hydrotalcite-based compound particles therefrom, and the recovered particles were washed with water and then dried at 120°C for 12 hr.

As a result, it was confirmed that the thus obtained silicic acid-coated hydrotalcite-based compound particles had a specific surface area of 14.1 m²/g, and the difference in BET specific surface area of the particles between before and after coated with silicic acid [(specific surface area of the particles after coated with silicic acid)-(specific surface area of the particles before coated with silicic acid)] was 2.6 m²/g. As a result of analyzing the obtained particles, it was confirmed that the Mg/Al ratio and the amount of SiO₂ based on the hydrotalcite-based compound particles were 2.50 and 3.0% by weight, respectively, which were substantially identical to those of the charged materials, and the average pore diameter of the particles was 149.6 Å. Further, it was confirmed that the silicic acid coated on the particles was amorphous silicic acid incapable of being detected by XRD.

In order to further confirm the condition of silicic acid, the obtained silicic acid-coated hydrotalcite-based compound particles only were dissolved by adjusting a pH of the suspension to 3 with a sulfuric acid aqueous solution. As a result, it was confirmed that the silicic acid was present only in the form of hollow particles having a shape and size substantially consistent with those of the original hydrotalcite-based compound particles, and no silicic acid was recognized outside of the silicic acid-coated hydrotalcite-based compound particles. From these facts, it was confirmed that a whole amount of the silicon material added was precipitated, attached and coated on the surface of the respective hydrotalcite-based compound particles in the form of an amorphous silicic acid incapable of being detected by XRD.

A part of the thus obtained silicic acid-coated hydrotalcite-based compound particles were heat-treated at 200°C for 1 hr. As a result, it was confirmed that the thus heat-treated particles had an average pore diameter of 148.1 Å.

The silicic acid-coated hydrotalcite-based compound particles were heat-treated at 205°C for 1 hr, and then subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (hard composition).

**Table 7**

| | |
|---|---|
| Chlorine-containing resin composition | 100 phr |
| Zinc stearate | 0.28 phr |
| The above silicic acid-coated hydrotalcite-based compound particles | 1 phr |

The above raw materials were kneaded using rolls at 180°C for 5 min, and then subjected to compression-molding/pressing treatment at 180°C, thereby obtaining a pressed sheet. It was confirmed that no foaming was caused in the thus obtained sheet. Also, it was confirmed that the obtained sheet had a b* value of 46.3, and the time required until reaching Level 4 was 35 min, and the time required until reaching Level 7 was 65 min.

### Comparative Example 1:

Magnesium sulfate heptahydrate crystals and aluminum sulfate octahydrate crystals were weighed in amounts of 315.02 g and 214.36 g, respectively, and then dissolved in pure water to prepare a solution having a total volume of 1 L. Separately, 72.67 g of sodium carbonate crystals were dissolved in pure water to prepare 500 mL of a solution, and further the resulting solution was mixed with 278.10 mL of a sodium hydroxide aqueous solution (12 N) and pure water to prepared an alkali aqueous solution having a total volume of 2 L. The thus obtained alkali aqueous solution was heated to 50°C, and then the previously prepared mixed aqueous solution of magnesium and aluminum was charged into the alkali aqueous solution, followed by stirring the obtained solution at 70°C for 4 hr. The thus prepared solution was transferred into an autoclave and aged therein at 160°C for 8 hr while stirring.

The obtained reaction suspension was filtered to recover the hydrotalcite-based compound particles therefrom, and the recovered particles were washed with water and then dried at 130°C for 13 hr. As a result, it was confirmed that the thus obtained hydrotalcite-based compound particles had a specific surface area of 12.4 m²/g. Also, as a result of analyzing the obtained particles, it was confirmed that the Mg/Al ratio was 2.15 which was substantially identical to that of the charged materials, and the average pore diameter of the particles was 151.3 Å.

A part of the thus obtained hydrotalcite-based compound particles were heat-treated at 200°C for 1 hr. As a result, it was confirmed that the thus heat-treated particles had an average pore diameter of 135.2 Å.

The hydrotalcite-based compound particles were heat-treated at 210°C for 2 hr, and then subjected to surface treatment with stearic acid in a coating amount of 3% by weight based on the weight of the hydrotalcite-based compound particles. The thus surface-treated hydrotalcite-based compound particles were used to prepare the following chlorine-containing resin composition (hard composition).

**Table 8**

| | |
|---|---|
| Chlorine-containing resin composition | 100 phr |
| Zinc stearate | 0.1 phr |
| Hydrotalcite-based compound particles | 1 phr |

The above raw materials were kneaded using rolls at 183°C for 5 min, and then subjected to compression-molding/pressing treatment at 183°C, thereby obtaining a pressed sheet. It was confirmed that a part of the above hydrotalcite was poorly dispersed in the resin. Also, it was confirmed that the obtained sheet had a b* value of 55.7, and the time required until reaching Level 4 was 20 min, and the time required until reaching Level 7 was 60 min.

### Comparative Example 2:

Magnesium sulfate heptahydrate crystals and aluminum sulfate octahydrate crystals were weighed in amounts of 332.75 g and 109.42 g, respectively, and then dissolved in pure water to prepare a solution having a total volume of 1 L. Separately, 41.73 g of sodium carbonate crystals were dissolved in pure water to prepare 500 mL of a solution, and further the resulting solution was mixed with 754.1 mL of a sodium hydroxide aqueous solution (12 N) and pure water to prepared an alkali aqueous solution having a total volume of 2 L. The thus obtained alkali aqueous solution was heated to 50°C, and then the previously prepared mixed aqueous solution of magnesium and aluminum was charged into the alkali aqueous solution, followed by stirring the obtained solution at 95°C for 6 hr. As a result, it was confirmed that the obtained hydrotalcite-based compound particles had a specific surface area of 15.8 m²/g.

Successively, the thus obtained reaction suspension was heated to 85°C while stirring. Then, 505.8 mL of a sodium silicate solution having a SiO₂ concentration of 40 g/L was charged into the reaction suspension, and then 0.5 N sulfuric acid was dropped to the suspension over 0.25 hr to control a pH of the suspension to 9.0. Further, the reaction suspension was aged for 0.5 hr. The reaction suspension was filtered to recover the silicic acid-coated hydrotalcite-based compound particles therefrom, and the recovered particles were washed with water and then dried at 60°C for 3 hr. As a result, it was confirmed that the thus obtained silicic acid-coated hydrotalcite-based compound particles had a specific surface area of 24.2 m²/g, and the difference in BET specific surface area of the particles between before and after coated with silicic acid [(specific surface area of the particles after coated with silicic acid)-(specific surface area of the particles before coated with silicic acid)] was 8.4 m²/g. As a result of analyzing the obtained particles, it was confirmed that the Mg/Al ratio and the amount of SiO₂ based on the hydrotalcite-based compound particles were 3.02 and 16.5% by weight, respectively, which were substantially identical to those of the charged materials, and the average pore diameter of the particles was 135.8 Å. Further, it was confirmed that the silicic acid coated on the particles was amorphous silicic acid incapable of being detected by XRD.

In order to further confirm the condition of silicic acid, the obtained silicic acid-coated hydrotalcite-based compound particles only were dissolved by adjusting a pH of the suspension to 3 with a sulfuric acid aqueous solution. As a result, it was confirmed that the silicic acid was present only in the form of hollow particles having a shape and size substantially consistent with those of the original hydrotalcite-based compound particles, and no silicic acid was recognized outside of the silicic acid-coated hydrotalcite-based compound particles. From these facts, it was confirmed that a whole amount of the silicon material added was precipitated, attached and coated on the surface of the respective hydrotalcite-based compound particles in the form of an amorphous silicic acid incapable of being detected by XRD.

A part of the thus obtained silicic acid-coated hydrotalcite-based compound particles were heat-treated at 200°C for 1 hr. As a result, it was confirmed that the thus heat-treated particles had an average pore diameter of 136.6 Å.

The silicic acid-coated hydrotalcite-based compound particles were subjected to surface treatment with stearic acid in a coating amount of 3% by weight based on the weight of the silicic acid-coated hydrotalcite-based compound particles. The thus surface-treated silicic acid-coated hydrotalcite-based compound particles were used to prepare the following chlorine-containing resin composition (soft to semi-hard composition).

**Table 9**

| | |
|---|---|
| Chlorine-containing resin composition | 100 phr |
| Di-2-ethylhexyl phthalate | 35 phr |
| Zinc stearate | 0.4 phr |
| The above silicic acid-coated hydrotalcite-based compound particles | 3 phr |

The above raw materials were kneaded using rolls at 168°C for 5 min, and then subjected to compression-molding/pressing treatment at 168°C, thereby obtaining a pressed sheet. It was confirmed that slight foaming was caused in the thus obtained sheet sample. Also, it was confirmed that the obtained sheet had a b* value of 65.7, and the time required until reaching Level 4 was 5 min, and the time required until reaching Level 7 was 35 min.

Various properties of the hydrotalcite-based compound particles obtained in the above Examples and Comparative Examples are shown together in the following Table.

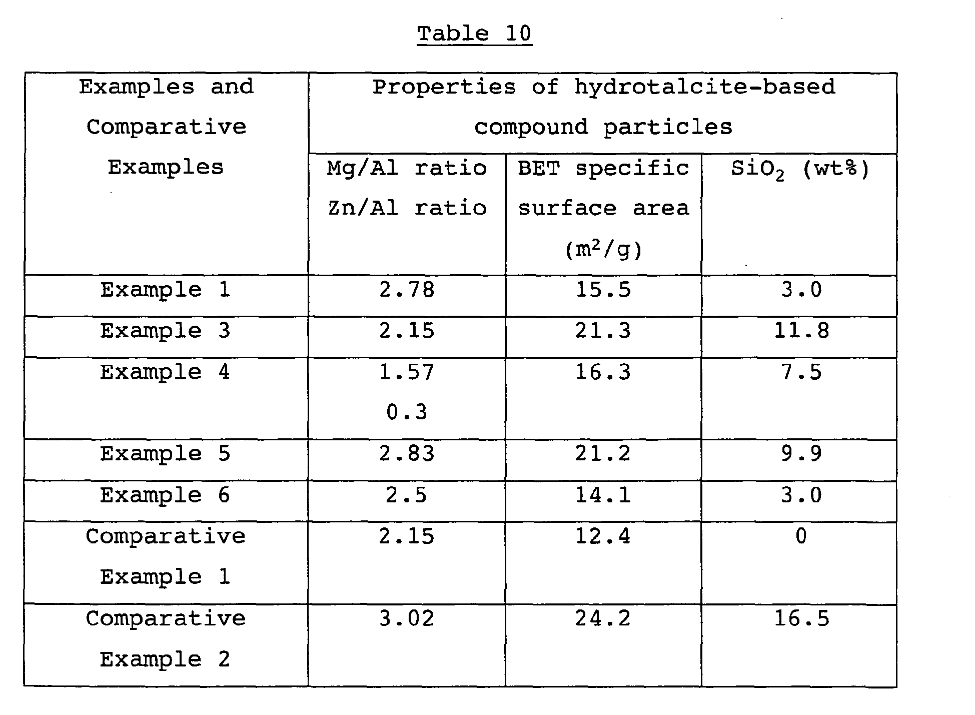

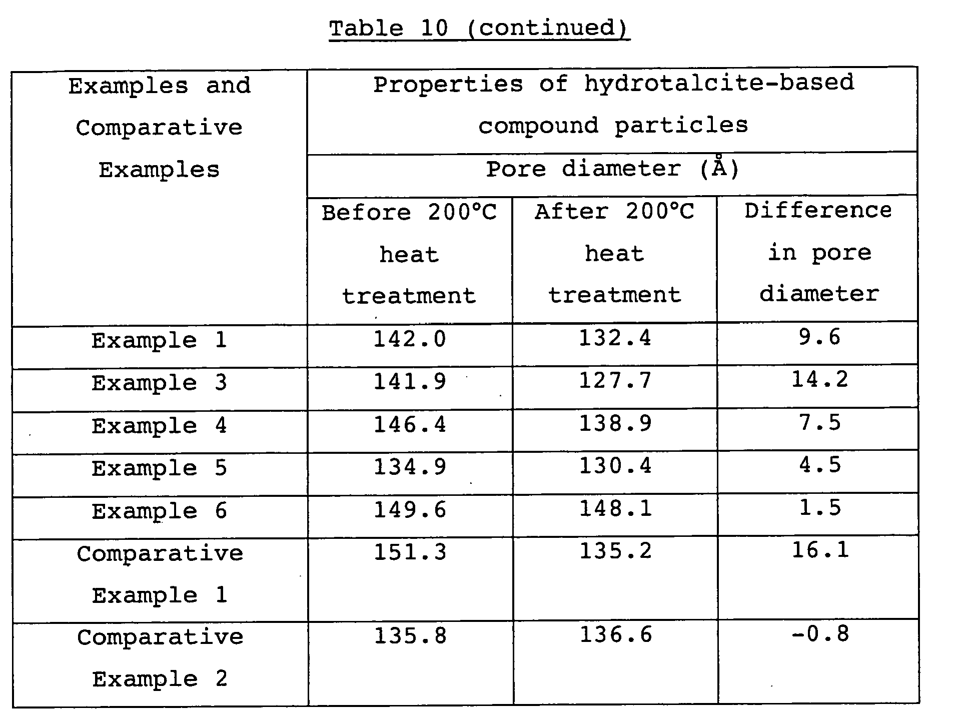

### INDUSTRIAL APPLICABILITY

When the silicic acid-coated hydrotalcite-based compound particles according to the present invention are extensively used in hard, semi-hard and soft chlorine-containing resin compositions, the resin compositions can be prevented from suffering from undesirable coloration and foaming, and can be considerably enhanced in stability as compared to those of the prior arts. As a result, the resin compositions can be used in broader applications.

## Claims

1. Silicic acid-coated hydrotalcite-based compound particles comprising Mg-Al-based or Mg-Zn-Al-based hydrotalcite-based compound particles and a silicic acid coat formed on the respective Mg-Al-based or Mg-Zn-Al-based hydrotalcite-based compound particles in an amount of 0.25 to 15% by weight in terms of SiO₂ based on the weight of the Mg-Al-based or Mg-Zn-Al-based hydrotalcite-based compound particles,
said silicic acid-coated hydrotalcite-based compound particles having a specific surface area of 10 to 100 m²/g, and
a difference in average pore diameter of the silicic acid-coated hydrotalcite-based compound particles between before and after subjected to heat treatment at 200°C for 1 hr {(average pore diameter of the particles before subjected to the heat treatment)-(average pore diameter of the particles after subjected to the heat treatment)} being 0 to 25 Å.

2. Silicic acid-coated hydrotalcite-based compound particles according to claim 1, wherein a difference between a specific surface area of the Mg-Al-based or Mg-Zn-Al-based hydrotalcite-based compound particles and a specific surface area of the silicic acid-coated hydrotalcite-based compound particles {(specific surface area of the particles after coated with the silicic acid)-(specific surface area of the particles before coated with the silicic acid)} is 0 to 20 m²/g.

3. Silicic acid-coated hydrotalcite-based compound particles according to claim 1 or 2, wherein the silicic acid-coated hydrotalcite-based compound particles are obtained by drying the particles in a temperature range of 105 to 150°C.

4. Silicic acid-coated hydrotalcite-based compound particles according to any one of claims 1 to 3, wherein the silicic acid-coated hydrotalcite-based compound particles are heat-treated at a temperature of 150 to 350°C.

5. A stabilizer for chlorine-containing resins comprising the silicic acid-coated hydrotalcite-based compound particles as defined in any one of claims 1 to 4.

6. A chlorine-containing resin composition comprising the silicic acid-coated hydrotalcite-based compound particles as defined in any one of claims 1 to 4 and a chlorine-containing resin.
